# EUROPEAN PATENT APPLICATION

(11) **EP 2 490 165 A1**
(43) Date of publication of application: **22.08.2012**
(21) Application number: 11154530.7
(22) Date of filing: 15.02.2011
(51) Int. Cl.: G06Q 20/00, H04L 29/06, G06F 21/00

(54) **Method for authorising a transaction**

(71) Applicant: Mac Express Sprl, 6032 Mont sur Marchienne (BE)
(72) Inventor: Van Lippevelde, Jean-Michel, L-8366, HAGEN (LU)
(74) Representative: Van Malderen, Joëlle

(57) **Abstract**

The present invention is related to a method for authorising a transaction between a user and a terminal close to the user using phone communication comprising the steps of:
- introducing data related to the transaction in said terminal, said data comprising a phone number of the user;
- sending the data related the transaction along with an ID corresponding to said terminal from the terminal to a first server, thereby opening a transaction session;
- the first server sending back to the terminal a random or pseudo-random one time password (OTP);
- communicating said OTP to the user;
- the user sending the OTP back to the first server through a communication channel;
the first server authorising the transaction if the OTP sent by the user match the OTP sent to the terminal, and the first server communicating to the terminal the result of the transaction and closing the transaction session.

## Description

### Field of the Invention

The present invention is related to a method for authorising a transaction between two participants.

### State of the Art

In recent years, several authentication methods have been developed in order to avoid the use of complex proprietary and dedicated devices usually used for reading secured data and the needs for such devices to communicate confidential data to remote server.

In a first attempt, SMS was used for small amount transaction, the bill being paid by sending an SMS comprising a predetermined message to a remote server. This method is limited to small transaction, as no particular verification of the identity of the sender may be done.

Some payment methods, such as SharEpay, SWAP Mobile in South Africa, Mobipay in Spain, M-Pesa in Tanzania (but not in Kenya, where M-Pesa menus are provided by STK rather than USSD), and mPay in Poland use Unstructured Supplementary Services Data (USSD). In this case, USSD being a secured two way communication channel, larger transaction may be authorised.

In both SMS based and USSD based method, the transaction may only be authorised by the telecom network provider. Usually, the transaction amount is billed to the buyer in his phone invoice and the seller is paid by the network provider. Therefore, the bankers are excluded from the transaction itself, except if a particular agreement between the banker and the network provider has been signed.

Therefore, bankers have tried to circumvent this limitation by proposing two communication channel validation method. Among proposed methods, the validation is performed by sending a one time password (OTP) by SMS to the buyer, the buyer validating the transaction by introducing said OTP in the seller's terminal. As a major drawback of this method, the delivery time of SMS over the cell network is not guaranteed, and said delivery time may be too long for a usual commercial transaction (up to more than one hour) .

### Aims of the Invention

The present invention aims to provide a method for authorising a transaction between a first server and a user which is easy to use and reliable.

### Summary of the Invention

The present invention is related to a method for authorising a transaction between a user and a terminal close to the user using phone communication comprising the steps of:
- introducing data related to the transaction in said terminal, said data comprising a phone number of the user;
- sending the data related the transaction along with an ID corresponding to said terminal from the terminal to a first server, thereby opening a transaction session;
- the first server sending back to the terminal a random or pseudo-random one time password (OTP);
- communicating said OTP to the user;
- the user sending the OTP back to the first server through a communication channel;
   the first server authorising the transaction if the OTP sent by the user match the OTP sent to the terminal, and the first server communicating to the terminal the result of the transaction and closing the transaction session.

According to particular preferred embodiments, the present invention comprises one or a suitable combination of at least one of the following features:
- the communication channel for sending the OTP back to the first server is established by sending by the first server a request to a second server, said request comprising the transaction data, and said second server comprising a phone network gateway, the second server calling the phone of the user, thereby opening a telecommunication channel, and the second server sending the transaction data through said phone communication channel, the terminal display the OTP in front of the user and the user sends the OTP back to the first server trough said phone communication channel and trough a communication channel between the second server sending and the first server;
- the phone of the user is a mobile phone;
- the first and second server are physically located on the same machine;
- the OTP is not displayed by the terminal, said terminal comprising radio communication means and the OTP being sent by said terminal through direct radio communication between said terminal and the phone of the user, said phone of the user being a mobile phone, the OTP being displayed on the phone of the user, and the user introducing the OTP in the terminal, said terminal sending the OTP back to the first server;

- the OTP is sent from the terminal to the phone of the user by peer to peer short message service (SMS);
- the transaction data is used as a seed for generating the pseudo-random OTP;
- the data related to the transaction comprises a personal identification number of the user.
- the telecommunication channel is a phone communication channel.

According to particular further preferred embodiment, the present invention is related to a method for authorising a transaction between a user and a terminal using phone communication comprising the steps of:
- introducing data related to the transaction in the terminal, said data comprising a phone number of the user;
- sending the data related the transaction along with an ID corresponding to said terminal from the terminal to a first server, thereby opening a transaction session;
- the first server sending back to the terminal a random one time password;
- the first server sending a request to a second server, said request comprising the transaction data, and said second server comprising a phone network gateway;
- the second server calling the phone of the user, thereby opening a phone communication channel, and communicating the transaction data through said phone communication channel;
- the user communicating the OTP to the second server through said phone communication channel;
- the second server sending the OTP communicated by the user to the first server;
   the first server authorising the transaction if the OTP sent by the second server match the OTP sent to the terminal, and the first server communicating to the terminal the result of the transaction and closing the transaction session.

Preferably, the user's phone is a mobile phone.

According to another preferred embodiment, the invention is related to a method for authorising a financial transaction between a user and a terminal using phone communication comprising the steps of:
- introducing data related to the transaction in the terminal, said data comprising the transaction details, a phone number and a personal identification number (PIN) related to the user;
- sending said data to a remote server for verifying the validity of the identification data of the user and the terminal;
- generating by said server a random or pseudo-random one time password (OTP);
- sending said OTP by encrypted communication to the terminal, said OTP being not displayed on said terminal;
- sending said OTP from the terminal to the phone of the user for displaying said OTP;
- the user introducing the displayed OTP in the terminal;
- sending an authorisation code to said server for authorizing said transaction if the OTP introduced by the user matches the OTP sent by the terminal, the server thereby authorising said transaction.

Advantageously, the phone of the user is a mobile phone comprising radio communication means and the terminal also comprises radio communication means.

Preferably, the sending of the OTP from the terminal to the mobile phone of the user is performed by direct radio communication between the terminal and the mobile phone of the user. Even more advantageously, the OTP is sent from the terminal to the mobile phone of the user by peer to peer short message service.

In all disclosed embodiments, the transaction is preferably a financial transaction between a user and a terminal. For example, the terminal is an automatic teller machine (ATM)used for cash withdrawal.

Advantageously in embodiments of the invention, the transaction is a commercial transaction, the user being a buyer, and the terminal being a terminal of the vendor.

Preferably, in the case of financial or commercial transaction, the transaction is a financial transaction and the first server verifies the availability of the transaction amount on the account of the user before authorising said transaction.

### Brief Description of the Drawings

Fig. 1 represents schematically an example of the implementation of the method.

Fig. 2 represents schematically another example of the implementation of the method.

Fig. 3 represents schematically a third example of implementation of the method of the invention.

### Figure keys

1. Terminal
2. User's phone
3. First server
4. Second server
5. Terminal sends transaction details
6. First server sends an OTP to the terminal
7. First server sends the transaction details and OTP to a second server.
8. Second server calls the user's phone
9.User sees the OTP displayed on the terminal and introduce it in his pone
10. User's phone sends the introduced OTP to the second server
11.Second server sends the OTP to the first server
12. First server sends the result of the transaction to the terminal
101. terminal
102. User's phone
103. Server
104. Terminal sends transaction details
105.First server sends an OTP to the terminal
106.Terminal sends the OTP to the user's phone
107.The OTP displayed on the user's phone is introduced in the terminal
108.The OTP introduced on the user's terminal is sent to the server
201. First server
202. Terminal
203.User's terminal (phone)
204. User
205. Keyboard of the terminal
206. Data network (IP cloud)
207. Phone communication channel (GSM)

### Detailed Description of the Invention

The present invention is related to a method for authorising a transaction between a user and a terminal, using conventional phone or cell phone. The disclosed method is particularly useful in some developing countries wherein most people do not have smart cards or bank cards having secured identification features, and sellers do not have card readers and bank terminals.

The present invention takes advantage of the availability of cell phones and therefore, the possibility of using communication with said cell phone to verify the identity and the agreement of a user regarding a transaction.

The method of the invention is particularly useful for authorising a financial transaction between a debtor and a creditor, such as for example between a buyer and a vendor.

Alternatively, the present invention may be used to authorise cash withdrawal at automatic teller machines (ATM). It may also be used to grant access to buildings or car park.

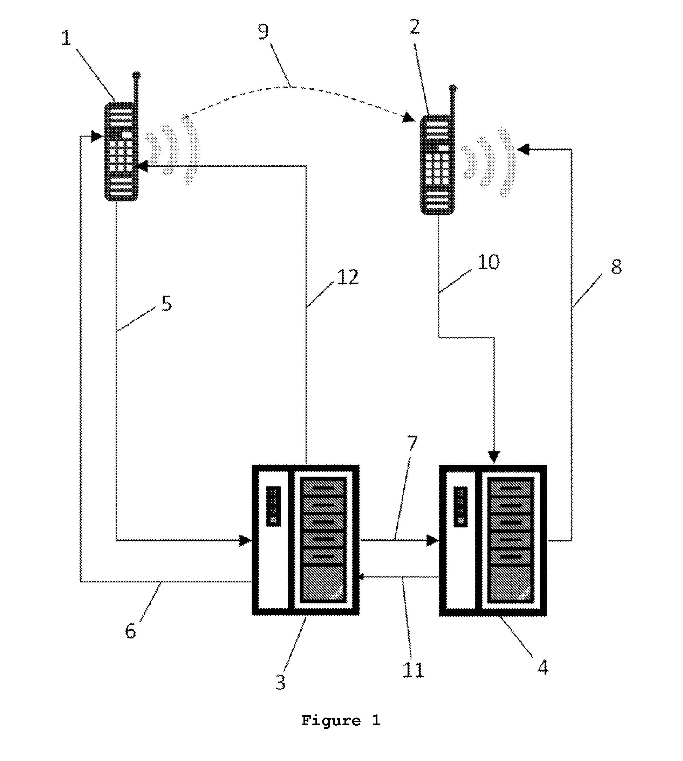

Fig. 1 represents an example of a first embodiment of the invention. In this example, the details of the transaction are first introduced in a terminal 1, said details comprising an ID corresponding to the terminal and a phone number of the user and, in the case of a financial transaction, the transaction amount. Those details are then sent 5 to a first server 3, thereby opening a transaction session.

In case of a commercial transaction, the terminal is the seller's terminal, the buyer being the user who needs to authorise a bank transfer from his account to the seller's account.

The first server sends back 6 to the terminal (seller's terminal) a random one time password (OTP). This OTP is then displayed on the terminal and shown 9 to the user (buyer). Concomitantly, the first server sends a request 7 to a second server 4, said request 7 comprising the transaction data, and said second server 4 comprising a cell phone network gateway. The second server calls 8 the phone of the user 2, opening a phone communication channel, and sending the transaction data through said phone communication channel. For example, this communication may be a vocal message produced by a voice synthesiser pronouncing the transaction details and asking for confirmation by introducing the OTP displayed on the terminal (seller's terminal).

The user communicate 10 then the OTP to the second server through the opened phone communication channel. This communication may be done for example by pressing the key sequence corresponding to the OTP on the mobile phone keyboard of the user, inducing a DTMF sequence recognisable by the second server. Alternatively this communication may be done by spelling the OTP, the second server comprising voice recognition means.

The second server sends 11 then the OTP communicated by the user to the first server 3, the first server authorising the transaction if the OTP sent by the second server match the OTP sent to the terminal. As a final step, the first server communicates 12 to the terminal the result of the transaction and closes the transaction session.

Notice that this example is not limited to mobile phone. For example, the terminal may be a mobile terminal of a sales representative, selling at the user's place of residence, the user's phone being a fix phone.

Advantageously, the first and the second server are located on the same physical machine, several services running on said machine.

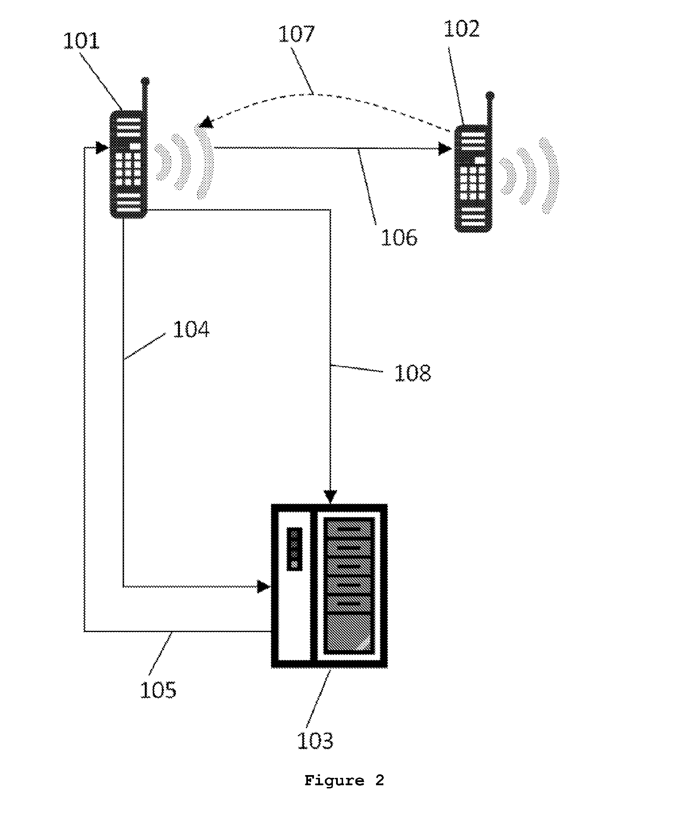

Fig. 2 represents a second example of implementation of the invention. In this example, the data related to the transaction is introduced in a terminal 101 of the first participant, said data comprising the transaction details, a phone number and a personal identification number (PIN) related to the user.

The terminal then opens a communication session with a remote server and sends 104 the data to the remote server for verifying the validity of the identification data of the user and the terminal.

In reply to said communication session, the server generates a random or pseudo-random one time password (OTP) and sends 105 the OTP to the terminal by encrypted communication. For example, the communication session between the server and the terminal advantageously uses https protocol. The OTP at this stage is not displayed on the terminal, but sent 106 by direct radio communication to the user's phone (buyer). This communication may advantageously be performed by peer to peer SMS. At this stage, the OTP is displayed on the user's mobile phone and the user introduces 107 the displayed OTP in the terminal for authorising the transaction.

The comparison between the OTP introduced by the user and the OTP sent by the server may either be compared directly in the terminal, the terminal sending an authorisation code to the server, or be compared by the first server, the terminal sending 108 the OTP introduced by the user to the server. The transaction is authorised if the OTP introduced by the first participant matches the OTP sent by the server.

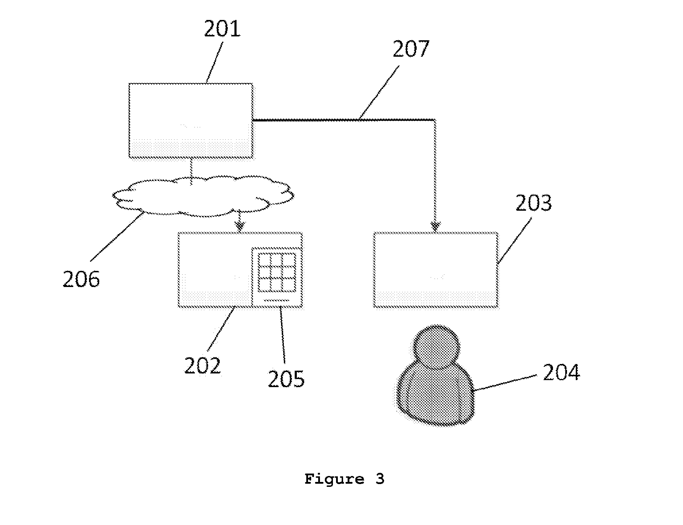

The method of the invention is also summarised in figure 3 representing a method to authenticate a user 204 of a terminal 202 connected to a data network 206(internet). A communication channel is established through the secure mobile gsm network between mobile equipment 203 of the user 204 in presence of the terminal 202 and an authentication server 201. The terminal 202 receives via download a unique and random sequence of digits (one time token or one time password; which will be subsequently destroyed after authentication attempt). The user 204 can read the unique and random number displayed on the terminal 202. The user types in the mobile equipment 203 to send the corresponding code through the use of DTMF sounds to the authentication server 201 via the mobile phone communication channel. The user is authenticated on the basis of the one time token send via his intervention from his mobile terminal 203 and on the basis of his identifier (his mobile phone number) of the mobile equipment 203.

The method of the invention may be used for example for securing the payment in a commercial transaction, the terminal being the terminal of the vendor and the user being the buyer, the server being used for authorising a financial transfer between the buyer's account and the vendor's account.

Alternatively, the terminal may be part of an automated teller machine (ATM), the sever authorising cash withdrawal on the basis of the authorising method of the invention.

In all the disclosed examples, the transaction data is advantageously used as a seed for generating the pseudo-random OTP.

It may be easily recognised that the method of the invention may be used in any situation wherein a user has to authenticate to authorise an action by a remote server. This could also be used for example to grant access to a building and so on.

## Claims

1. Method for authorising a transaction between a user and a terminal close to the user using a phone communication comprising the steps of:
- introducing data related to the transaction in said terminal, said data comprising a phone number of the user;
- sending the data related the transaction along with an ID corresponding to said terminal from the terminal to a first server, thereby opening a transaction session;
- the first server sending back to the terminal a random or pseudo-random one time password;
- communicating said one time password to the user;
- the user sending the one time password back to the first server through a communication channel;
the first server authorising the transaction if the one time password sent by the user match the one time password sent to the terminal, and the first server communicating to the terminal the result of the transaction and closing the transaction session.

2. Method according to claim 1 wherein the communication channel for sending the one time password back to the first server is established by sending by the first server a request to a second server, said request comprising the transaction data, and said second server comprising a phone network gateway, the second server calling the phone of the user, thereby opening a phone communication channel, and the second server sending the transaction data through said phone communication channel, the terminal displays the one time password in front of the user and the user sends the one time password back to the first server trough said phone communication channel and trough a communication channel between the second server sending and the first server;

3. Method according to claim 2 wherein the phone of the user is a mobile phone.

4. Method according to any of the claims 2 or 3 wherein the first and second server are physically located on the same machine.

5. Method according to claim 1 wherein the one time password is not displayed by the terminal, said terminal comprising radio communication means and the one time password is sent by said terminal through direct radio communication between said terminal and the phone of the user, said phone of the user being a mobile phone, the one time password being displayed on the phone of the user, and the user introducing the one time password in the terminal, said terminal sending the one time password back to the first server.

6. Method according to claim 5 wherein the one time password is sent from the terminal to the phone of the user by peer to peer short message service (SMS).

7. Method according to any of the previous claims wherein the transaction data is used as a seed for generating the pseudo-random one time password.

8. Method according to any of the previous claims wherein the data related to the transaction comprises a personal identification number of the user.

9. Method according to any of the previous claims wherein the transaction is a financial transaction.

10. Method according to any of the previous claims wherein the transaction is a commercial transaction, the user being a buyer, and the terminal being the terminal of a vendor.
